# EUROPEAN PATENT APPLICATION

(11) **EP 1 650 938 A1**
(43) Date of publication of application: **26.04.2006**
(21) Application number: 05023047.3
(22) Date of filing: 21.10.2005
(51) Int. Cl.: H04M 1/725, H04N 7/14

(54) **Apparatus and method for automatically changing communication mode in mobile video communication terminal**

(30) Priority: 22.10.2004 KR 2004084784
(71) Applicant: Samsung Electronics Co., Ltd., Suwon-si, Gyeonggi-Do (KR)
(72) Inventor: Cho, Seung-Hwan, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a system and a method which automatically change a communication mode in a mobile communication terminal. The system includes a detection part for detecting a state of the mobile communication terminal. It is determined if the mobile communication terminal is in the open state, an ear-mike or a camera part is operating, or a user is within a predetermined distance. According to the detection result, the communication mode is automatically changed to a voice communication mode from a video communication mode or to the video communication mode from the voice communication mode.

## Description

The present invention relates to a mobile communication terminal, and more particularly to a mobile communication terminal capable of performing video communication.

Generally, present day mobile communication terminals can exchange various forms of multimedia data with other mobile communication devices by using a high-resolution camera capable of photographing a moving picture. In addition, the level of technology of the present day mobile communication terminal enables real-time transmission of moving picture data. Accordingly, differently from the early mobile communication terminal having performed only voice communication, the present day mobile communication terminal can perform video communication by which users can see an image of the other party.

If a caller selects video communication and inputs the phone number in a typical mobile communication terminal, the video communication or voice communication may be performed according to selection of the receiver. However, if the caller or the receiver changes its communication mode to a voice communication mode, a signal for changing the communication mode is sent to a mobile switch center (MSC) and the MSC transmits to the mobile communication terminal of the caller or the receiver a signal indicating that the communication mode has been changed to the voice communication mode. The mobile communication terminal of the caller or the receiver, which has received the signal, changes the communication mode to the voice communication mode from the video communication mode. In addition, this communication mode changing procedure is applied to the changing of the communication code to the video communication mode from the voice communication mode in the same way.

Accordingly, in the typical mobile communication terminal, a user must manually perform the communication mode changing procedure in order to change a communication mode. In order to change the communication mode in the current communication mode changing procedure, the user must manually either select an intended communication mode or press a predetermined key in the typical mobile communication terminal.

It is very inconvenient for the user during a communication to manually change the communication mode by means of a predetermined key. For example, the user may erroneously press another key instead of the predetermined key for changing the communication mode, thereby interrupting the communication. In addition, the manual changing of the communication mode may disturb communication between the originator and the receiver.

Accordingly, the present invention has been made to solve at least the above-mentioned problems occurring in the prior art.

It is the object of the present invention to provide a method and an apparatus, which can automatically change a communication mode of a mobile communication terminal.

This object is solved by the subject matter of the independent claims.

Preferred embodiments are defined in the dependent claims.

To accomplish the above, there is provided a apparatus that includes a detection part including an open state detection part capable of detecting an open state in which a folder of the mobile communication terminal is open; and a control part for setting the communication mode of the mobile communication terminal to one of a video communication mode and a voice communication mode according to a detection result and an operation state of a camera part of the mobile communication terminal.

According to another aspect of the present invention, there is provided a method that includes a communication mode detection step of detecting a current communication mode of the mobile communication terminal, an operation state detection step of detecting an operation state of the mobile communication terminal according to a folder state of the mobile communication terminal or an operation state of a camera part of the mobile communication terminal, and a communication mode change step of changing the detected communication mode according to the operation state of the mobile communication terminal.

The present invention will be more apparent from the following detailed description taken in conjunction with the accompanying drawings, in which:
FIG. 1 is a block diagram showing a structure of a mobile communication terminal according to an embodiment of the present invention;
FIG. 2 is a flowchart showing a communication mode changing procedure of a control part of a mobile communication terminal according to an embodiment of the present invention;
FIG. 3 is a flowchart showing a communication state detecting procedure for changing a communication mode in a mobile communication terminal according to an embodiment of the present invention;
FIG. 4 is a flowchart showing a communication mode changing procedure from a video communication mode to a voice communication mode in a mobile communication terminal according to an embodiment of the present invention; and
FIG. 5 is a flowchart showing a communication mode changing procedure from a voice communication mode to a video communication mode in a mobile communication terminal according to an embodiment of the present invention.

Hereinafter, a preferred embodiment of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may obscure the subject matter of the present invention.

According to the present invention, it is determined if a folder of a mobile communication terminal is in an open state so that a communication mode of the mobile communication terminal may be automatically changed. If the folder is in the open state, operation states of an automatically-operated camera and an ear-mike are detected so that a control part of the mobile communication terminal may recognize a current communication mode. A folder-type mobile communication terminal will now be described by way of example according to an embodiment of the present invention.

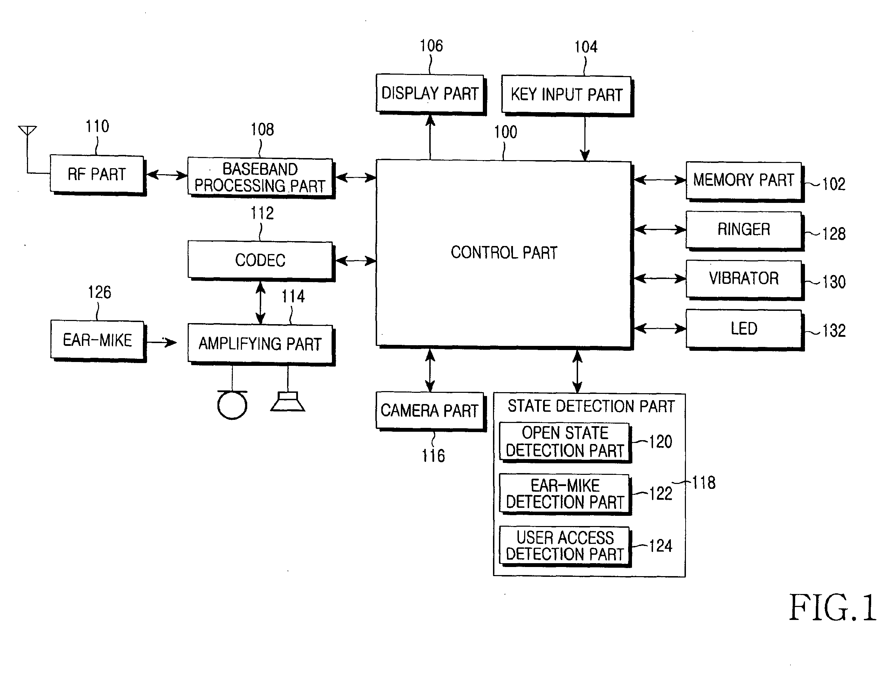

FIG. 1 is a block diagram showing a structure of the mobile communication terminal according to an embodiment of the present invention. The mobile communication terminal according to an embodiment of the present invention includes a control part 100 connected to a memory part 102, a key input part 104, a display part 106, a baseband processing part 108, a coder-decoder (CODEC) 112, a camera part 116, and a state detecting part 118. The control part 100 processes a voice signal or data according to protocols for telephone conversation, data communication, and wireless Internet access and controls each part of the mobile communication terminal. In addition, the control part 100 receives key input of a user from the key input part 104 and controls the display part 106 according to the key input, so that image information according to the key input of the user may be created and provided. If the folder of the mobile communication terminal is open, the control part 100 automatically operates the camera part 116.

The control part 100 changes a video communication mode into a voice communication mode, or to the video communication mode from the voice communication mode according to state information about the mobile communication terminal detected by the state detecting part 118 and a current operation state of the camera part 116. Also, when the voice communication mode is changed into the video communication mode and a signal indicating that video communication can be performed is received from the other party for communication, the mobile communication terminal informs the user of the fact that the other party can make video communication through ringing sound of a ringer, vibration of a vibrator 130, or light of a light emitted diode (LED) 132.

Herein, the state detecting part 118 is used for detecting an open state of the mobile communication terminal, an operation state of an ear-mike 126, or whether or not the user makes communication with the other party while holding the mobile communication terminal to the user's ear according to an embodiment of the present. Accordingly, the state detecting part 118 may include an open state detecting part 120 capable of detecting if the mobile communication terminal is in the open state, an ear-mike detecting part 122 capable of detecting if the ear-mike 126 operates, and a user access detecting part 124 capable of detecting access of the user. Herein, generally, the open state of the mobile communication terminal refers to a state in which the user opens the folder of the mobile communication terminal in order to conduct video communication or voice communication.

The open state detecting part 120 detects if the mobile communication terminal is in the open state according to the control of the control part 100 and inputs a detection result to the control part 100 as state detection information. The ear-mike detecting part 122 detects if the attachable ear-mike 126 is mounted on the mobile communication terminal and the ear-mike 126 is operating. The ear-mike detecting part 122 inputs a detection result to the control part 100 as state detection information. The user access detecting part 124 includes a sensor, such as a ultrasonic sensor or an infrared sensor, for detecting if the user is within the predetermined distance. When the user is detected within the predetermined distance, the user access detecting part 124 inputs a signal indicating that the user is within a predetermined distance to the control part 100 as state detection information.

The memory part 102 connected to the control part 100 includes a read only memory (ROM), a flash memory, a random access memory (RAM), etc. Among other things, the ROM stores program for data processing and control of the control part 100 and various kinds of reference data. Also, the RAM provides a working memory of the control part 100, and the flash memory provides an area for storing various kinds of updatable storage data. The key input part 104 includes various keys including numeric keys and provides key input by the user to the control part 100. In addition, the display part 106 includes a liquid crystal display (LCD). The display part 106 creates and provides images under the control of the control part 100.

In addition, an RF part 110 transmits/receives an RF signal to/from a base station. The RF part 110 converts a received signal into an intermediate frequency signal and outputs the converted signal to the baseband processing part 108 connected to the control part 100. The RF part 110 converts an IF signal input from the baseband processing part 108 into an RF signal and transmits the RF signal. In addition, the baseband processing part 108 is a baseband analog ASIC (BBA) providing an interface between the control part 100 and the RF part 110. The baseband processing part 108 converts a baseband digital signal input from the control part 100 into an analog IF signal so as to apply the analog IF signal to the RF part 110 and converts an analog IF signal input from the RF part 100 into a baseband digital signal so as to apply the baseband digital signal to the control part 100. The CODEC 112 linked with the control part 100 is connected to both a microphone and a speaker through a signal amplifying part 114. The CODEC 112 encodes a voice signal input from the microphone and outputs voice data to the control part 100. The CODEC 112 decodes voice data input from the control part 100 and outputs the decoded signal to the speaker through the signal amplifying part 114. In addition, the signal amplifying part 115 amplifies a voice signal input from the microphone or a voice signal output to the speaker. At this time, the signal amplifying part 115 adjusts sound volume of the speaker and a gain of the microphone according to the control of the control part 100. The camera part 116 inputs image information to the control part 100 under the control of the control part 100, or sends input image information to the control part in real time so that video communication may be achieved. Accordingly, the mobile communication terminal according to an embodiment of the present invention recognizes a current communication mode thereof depending on state detection information received by the control part 100 through the state detecting part 118 and a current operation state of the camera part 116, so that the mobile communication terminal can automatically change the communication mode.

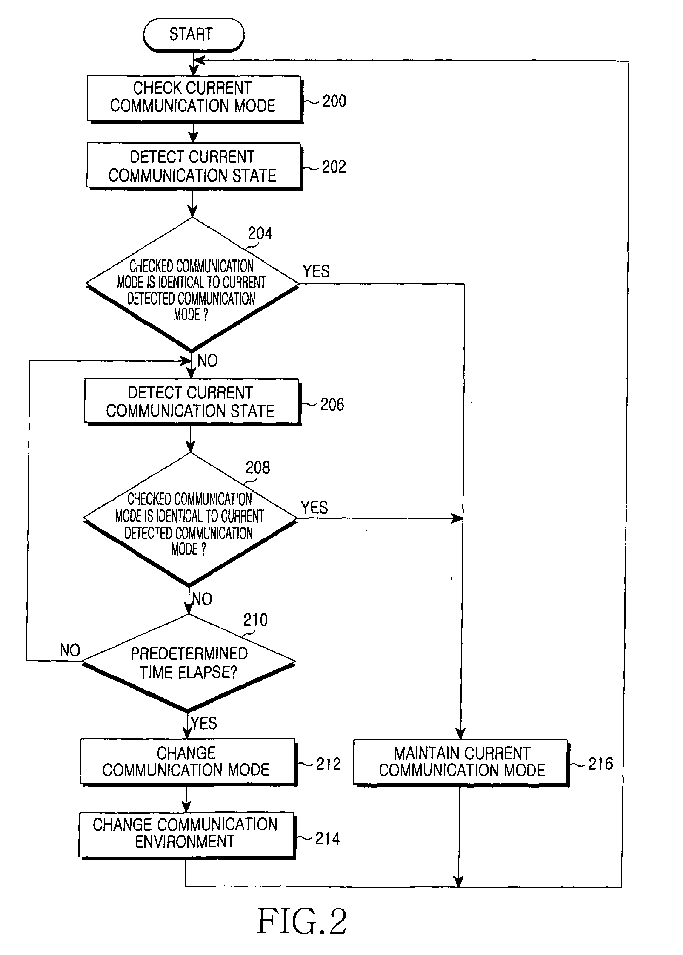

FIG. 2 is a flowchart showing a procedure of automatically changing a communication mode by a control part of a mobile communication terminal according to an embodiment of the present invention. When a user begins a communication, the control part 100 checks and recognizes a current communication mode in step 200. The control part 100 detects a current state of the mobile communication terminal depending on state detection information input from the state detecting part 118 of the mobile communication terminal according to the embodiment of the present invention and recognizes a communication mode according to the current state in step 202. In step 204, the control part compares the communication mode checked in step 200 with the communication mode recognized according to the current state of the mobile communication terminal in step 202 and determines if the communication modes are the same. If the communication mode checked in step 200 is to the same as the communication mode recognized in step 202, the control part 100 performs step 216 so as to maintain a current communication mode. After that, the control part 100 performs step 200 so as to check a current communication mode.

If the communication mode checked in step 200 is different from the communication mode recognized in step 202, the control part 100 performs step 206 so as to receive state detection information from the state detecting part 118 and detect a current state of the mobile communication terminal. Herein, a procedure of detecting the current state of the mobile communication terminal in step 206 is to the same as that in step 202. In addition, the control part 100 performs step 208 so as to determine if the communication mode checked in step 200 is the same as the communication mode recognized according to the state detected in step 206. If the checked communication mode is the same as the recognized communication mode, the control part 100 performs step 216 so as to maintain a current communication mode.

However, if the checked communication mode differs from the recognized communication mode in step 208, the control part 100 performs step 210 so as to determine if a predetermined time elapses. If the predetermined time does not elapse, the control part 100 returns to step 206 so as to detect a current state of the mobile communication terminal. However, if the predetermined time elapses, the control part 100 performs step 212 so as to change a communication mode. In addition, the control part 100 suitably changes communication environment for the changed communication mode. For example, if installation of the ear-mike 126 is not detected and a voice communication mode is changed into a video communication mode, the communication environment automatically changes to an environment in which the camera and the speaker phone are operated. Therefore, when a user begins a communication, the mobile communication terminal according to an embodiment of the present invention continuously checks a current communication mode and detects a state thereof, so that the mobile communication terminal recognizes a communication mode according to a current state thereof. The mobile communication terminal recognizes if it is necessary to change the communication mode according to the detected state of the mobile communication terminal. If it is necessary to change the communication mode, the control part allows the communication mode to be automatically changed.

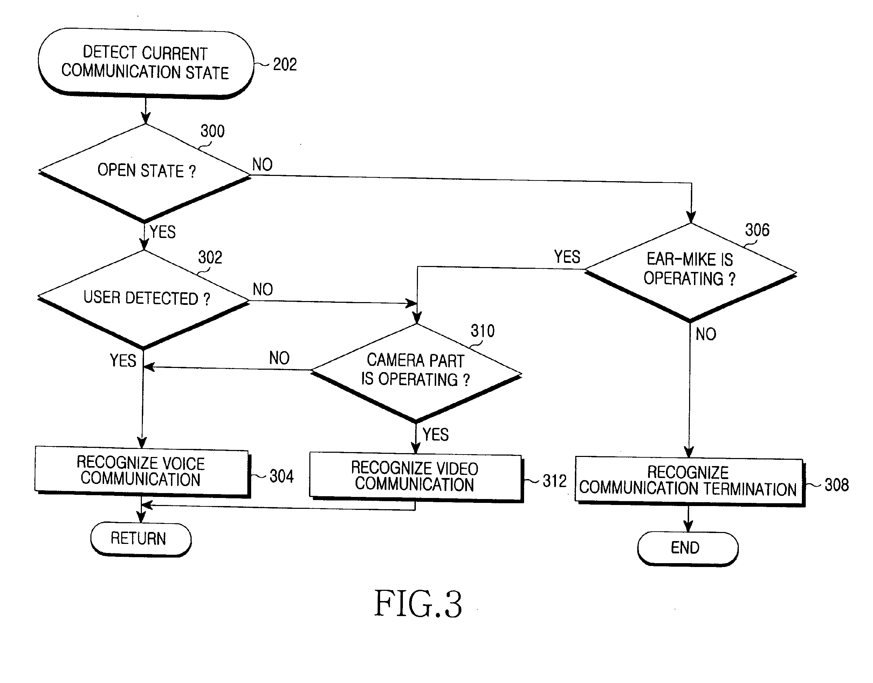

FIG. 3 illustrates a procedure of detecting a state of the mobile communication terminal in step 202 of FIG. 2 and recognizing a communication mode according to the detected state. If step 202 of detecting a state of the mobile communication terminal is performed, the control part 100 receives state detection information from the open state detecting part 120 of the state detecting part 118 and determines if the mobile communication terminal is in an open state in step 300. Herein, the open state means a state in which a user opens a folder of the mobile communication terminal in order to perform video communication or voice communication and can confirm the display part 116 with the naked eye.

If the mobile communication terminal is in the open state in step 300, the control part 100 performs step 302 so as to determine if the user access detecting part 124 detects a user within a predetermined distance. Herein, the user access detecting part 124 is used for detecting if a user conducts a communication with the mobile communication terminal close to the user's face. The predetermined distance is a distance for detecting access of the user to the mobile communication terminal when the user makes the mobile communication terminal close to the user's face in order to conduct a communication.

If the user access detecting part 124 detects that the user is within the predetermined distance in step 302, the control part 100 recognizes in step 304 that the mobile communication terminal is in the voice communication mode and performs step 204 of FIG. 2. If the user access detecting part 124 does not detect the user within the predetermined distance, the control part 100 performs step 310 so as to determine if the camera part is operating, that is, if image information is input to the control part 100. If the camera part 116 is operating, the control part 100 performs step 312 so as to recognize that the mobile communication terminal is in the video communication mode, and then, performs step 204 of FIG. 2. However, if the camera part 116 does not operate in step 302, the control part 116 performs step 304 so as to recognize that the mobile communication terminal is in the voice communication mode.

If the mobile communication terminal is not in the open state in step 300, the control part 100 performs step 306 so as to determine if the ear-mike 126 is operating. If the ear-mike 126 is not operating in step 306, the control part 100 performs step 308 so as to recognize that communication of the mobile communication terminal is terminated. However, if it is determined that the ear-mike 126 is operating in step 306, the control part 100 performs step 310 so as to determine if the camera part 116 is operating. If the camera part 116 is not operating in step 310, the control part 100 recognizes in step 304 that the mobile communication terminal is in the voice communication mode while operating the ear-mike 126. However, if the camera part 116 is operating in step 310, the control part 100 recognizes in step 312 that the mobile communication terminal is in the video communication mode while operating the ear-mike 126. Accordingly, in the mobile communication terminal according to the one embodiment of the present invention, a current communication mode of the mobile communication terminal is recognized depending on the open state, existence of the user within a predetermined distance, and operation states of the ear-mike 126 and the camera part 116. Thus, a communication mode is automatically changed into the current communication mode.

FIG. 3 illustrates step 202 of FIG. 2 in detail. Step 206 of FIG. 2 detects a state of the mobile communication terminal as shown in FIG. 3. Accordingly, step 206 of FIG. 2 may be performed is the same manner as step 202 shown in FIG. 3.

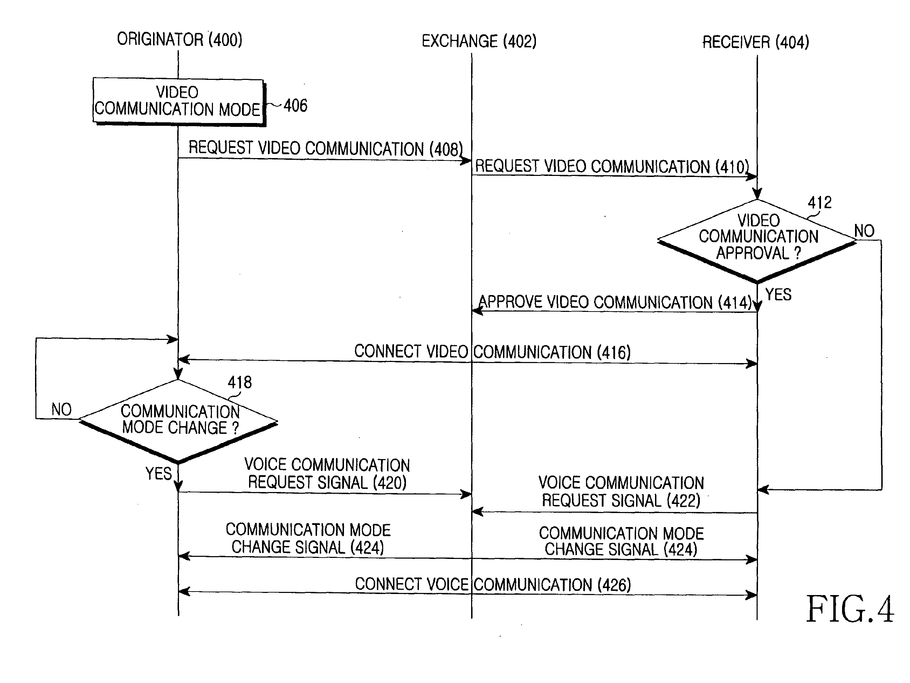

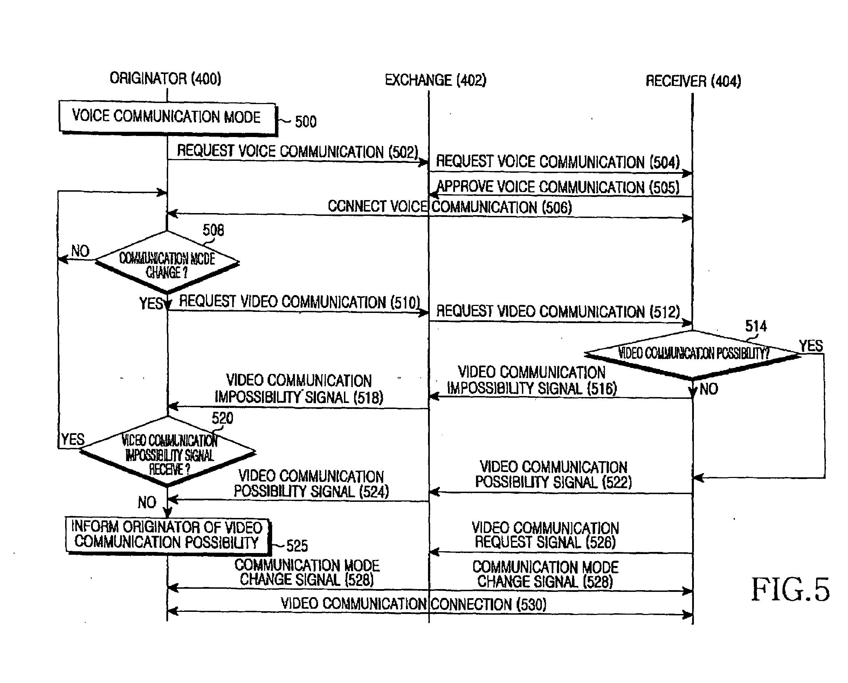

FIGs. 4 and 5 are flowcharts showing communication mode changing procedures in the mobile communication terminal according to an embodiment of the present invention. FIGs. 4 and 5 show a caller 400 requesting communication with a receiver 404 by using the mobile communication terminal according to an embodiment of the present invention, and an exchange 402 enabling communication by linking a mobile communication terminal of the caller 400 with a mobile communication terminal of the receiver 404. The exchange 402 includes a base station and a mobile switching center in the side of the caller 400 and a base station and a mobile switching center in the side of the receiver 404. Hereinafter, all of these elements are referred to as the exchange 402 for the purpose of explanation.

A procedure, in which a communication mode is changed to a voice communication mode from a video communication mode, will be described with reference to FIG. 4. When the caller 400 opens a folder of the mobile communication terminal according to an embodiment of the present invention, the control part 100 is in the video communication mode for operating the camera part 116. When the caller 400 inputs the phone number of the receiver 404, the mobile communication terminal according to an embodiment of the present invention performs step 408 so as to transmit a video communication request signal to the exchange 402. Then, the exchange 402 receives the video communication request signal and transmits the video communication request signal to the receiver 404 corresponding to the phone number in step 410. The mobile communication terminal of the receiver 404 having received the video communication request signal determines if video communication is approved in step 412. If the receiver 404 rejects the video communication in step 412 or it is impossible to perform the video communication, the mobile communication terminal of the receiver 404 transmits a voice communication request signal to the exchange 402 in step 422. The exchange 402 having received the voice communication request signal links the caller 400 with the receiver 404, thereby enabling the voice communication.

If the receiver 404 approves the video communication in step 412, the mobile communication terminal of the receiver 404 transmits a video communication approval signal to the exchange 402 in step 414. The exchange 402 having received the video communication approval signal links the caller 400 with the receiver 402 in step 416 in order to enable the video communication . If the control part 100 of the mobile communication terminal of the caller 400 checks the sate of the mobile communication terminal in step 418 and the mobile communication terminal of the caller 400 is in the open state, the control part 100 checks if the caller 400 is within a predetermined distance. If the caller 400 is not detected within the predetermined distance, the control part 100 checks if the camera part 116 is operating. Thus, if the mobile communication terminal is in the voice communication mode according to the check result for the state of the mobile communication terminal, the control part 100 transmits a voice communication request signal to the exchange 402 in step 420. In step 426, the exchange 402 having received the voice communication request signal links the caller 400 with the receiver 404, thereby enabling the voice communication.

A procedure, in which the voice communication mode is changed to the video communication mode, will be described with reference to FIG. 5. If the caller 400 performs step 500 so as to input the phone number of the receiver 404 in a voice communication mode, the control part 100 transmits a voice communication request signal to the exchange 402 in step 502. The exchange 402 having received the voice communication request signal transmits a voice communication request signal to the receiver 404 corresponding to the phone number included in the voice communication request signal received from the caller 500 in step 504. If the receiver 404 responds to the voice communication request signal, the mobile communication terminal of the receiver 404 transmits a voice communication approval signal to the exchange 402 in step 505. Then, the exchange 402 links the mobile communication terminal of the caller 400 with the mobile communication terminal of the receiver 404 in step 506, thereby enabling a voice communication.

In step 508, the control part 100 of the mobile communication terminal of the caller 400 checks the sate of the mobile communication terminal. If the mobile communication terminal of the caller 400 is in the open state, the control part 100 checks if the caller 400 is within a predetermined distance. If the caller 400 is not detected within the predetermined distance, the control part 100 checks if the camera part 116 is operating. Thus, if the mobile communication terminal is in the video communication mode according to the check result, the control part 100 transmits a video communication request signal to the exchange 402 in step 510. The exchange 402 having received the video communication request signal performs step 512 so as to transmit a video communication request signal to the mobile communication terminal of the receiver.

Then, the mobile communication terminal of the receiver 404 performs step 514 so as to determine if the receiver 404 rejects video communication or if the receiver 404 can perform the video communication. Hereinafter, examples, in which the receiver 404 can not perform the video communication, will be described. The examples include a case in which the camera part included in the mobile communication terminal of the receiver 404 does not operate, and a case in which the mobile communication terminal of the receiver 404 is not in the open state, that is, a case in which a folder of a folder-type mobile communication terminal of the receiver 404 is closed.

If it is impossible for the receiver 404 to perform the video communication in step 514, the mobile communication terminal of the receiver 404 transmits a video communication impossibility signal to the exchange 402 in step 516. In step 518, the exchange 402 transmits to the caller 400 a signal indicating that it is impossible for the mobile communication terminal of the receiver 404 to perform the video communication. Then, the control part 100 of the caller 400 determines in step 520 if the video communication impossibility signal is received. If the video communication impossibility signal is received, the control part 100 maintains a voice communication connection of step 506. If the video communication impossibility signal is not received in step 520, the control part 100 informs the caller 400 by using the ringer 128, the vibrator 130, the LED 132, or a message displayed on the display part 106 in step 525 of the fact that the mobile communication terminal of the receiver 404 is in a video communication possibility state.

However, if the mobile communication terminal of the receiver 404 is in the video communication possibility state according to the determination result of step 514, the mobile communication terminal of the receiver 404 transmits a video communication possibility signal to the exchange 402 in step 522. In step 526, the mobile communication terminal of the receiver 404 transmits a video communication request signal to the exchange 402.

In step 524, the exchange 402 having received the video communication possibility signal transmits to the mobile communication terminal of the caller 400 a signal indicating that it is possible for the mobile communication terminal of the receiver 404 to perform the video communication. In step 525, the control part 100 of the caller 400 having received the signal informs the caller 400 by using ringing sound of the ringer 128, light of the LED 130, vibration of the vibrator 132, or a message displayed on the display part 106 of the fact that the mobile communication terminal of the receiver 404 is in the video communication possibility state.

In step 528, the exchange 402 having received the video communication request signal from the mobile communication terminal of the receiver 404 transmits a signal indicating that the communication mode is changed in the mobile communication terminals of both the caller 400 and the receiver 404. In step 530, the exchange 402 links the mobile communication terminal of the caller 400 with the mobile communication terminal of the receiver 404, thereby enabling the video communication. Therefore, in a mobile communication terminal according to an embodiment of the present invention, when a video communication mode is changed into a voice communication mode or the voice communication mode is changed into the video communication mode, the control part 100 of the mobile communication terminal detects a current state and automatically changes the communication mode according to a detected state.

The present invention includes a state detecting part for detecting a current state of a mobile communication terminal, thereby detecting if the mobile communication terminal is in the open state, an ear-mike or a camera part is operating, or if a user is within a predetermined distance. According to a detected state, a communication mode automatically changes to a voice communication mode from a video communication mode or to the video communication mode from the voice communication mode. Therefore, according to the present invention, it is unnecessary for the user to perform additional manipulation for changing the communication mode, so that it is possible to reduce the inconvenience of the user caused by a manual change of the communication mode.

While the invention has been shown and described with reference to certain preferred embodiments thereof, it will be understood by those skilled in the art that various changes in form and details may be made therein without departing from the scope of the invention. In particular, according to one embodiment of the present invention, it is detected if the mobile communication terminal is in the open state, an ear-mike or a camera part is operating, or a user is within a predetermined distance. According to a detected state, it is recognized if the communication mode of the user is the voice communication mode or the video communication mode. However, a detection method according to one embodiment of the present invention is only one embodiment for explaining the present invention. For example, in addition to the methods described above, use of the speaker phone may be recognized as a progress of a video communication in detecting the state of the mobile communication terminal. Moreover, the communication mode of the mobile communication terminal may be detected by means of only one of the open state detecting part and the ear-mike detecting part. Consequently, the scope of the invention should not be limited to the embodiment, but should be defined by the appended claims.

## Claims

1. An apparatus for automatically changing a communication mode in a mobile communication terminal capable of performing video communication, the apparatus comprising:
a detection part including an open state detection part capable of detecting a folder open state of the mobile communication terminal; and
a control part for setting the communication mode of the mobile communication terminal to one of a video communication mode and a voice communication mode according to a detection result and an operation state of a camera part of the mobile communication terminal.

2. The apparatus as claimed in claim 1, further comprising an ear-mike detection part for detecting an operation of an ear-mike of the mobile communication terminal.

3. The apparatus as claimed in claim 2, wherein the control part determines if the mobile communication terminal is conducting a communication according to the detection result of the open state detection part, an operation state of the camera part, and the operation of the ear-mike.

4. The apparatus as claimed in claim 3, wherein the control part recognizes a current communication mode as one of the video communication mode and the voice communication mode according to the operation state of the camera part when the folder is not in the open state and the ear-mike is in the operation state.

5. The apparatus as claimed in one of claims 1 to 4, further comprising a user access detection part capable of detecting access of a user when the user is within a predetermined distance of the apparatus.

6. The apparatus as claimed in claim 5, wherein the user access detection part includes one of a ultrasonic sensor and an infrared sensor.

7. The apparatus as claimed in claim 5, wherein the control part recognizes a current communication mode as one of the video communication mode and the voice communication mode according to a detection result of the user access detection part if the folder is in the open state.

8. The apparatus as claimed in claim 5, wherein the control part recognizes a current communication mode as one of the video communication mode and the voice communication mode according to the operation state of the camera part if the folder is in the open state and the user is not detected.

9. The apparatus as claimed in one of claims 1 to 8, wherein the control part controls the camera part in such a manner that the camera part of the mobile communication terminal is operated if the open state is detected.

10. The apparatus as claimed in one of claims 1 to 9, wherein the control part receives from an opposite party a signal indicating if the video communication can be performed and informs a user of whether or not the video communication can be performed when the communication mode is changed to the video communication mode from the voice communication mode.

11. The apparatus as claimed in claim 10, wherein the control part informs the user of whether or not the video communication can be performed by using at least one of a ringer, a vibrator, a light emitted diode, and a display part of the mobile communication terminal.

12. A method for automatically changing a communication mode in a mobile communication terminal capable of performing video communication, the method comprising the steps of:
detecting a current communication mode of the mobile communication terminal;
detecting an operation state of the mobile communication terminal based on at least one of a folder state of the mobile communication terminal and an operation state of a camera part of the mobile communication terminal; and
changing the detected communication mode according to the operation state of the mobile communication terminal.

13. The method as claimed in claim 12, wherein the changing step includes the step of comparing the current communication mode with a communication mode detected in the operation state detection step and then changing the current communication mode into the communication mode detected in the operation state detection step if the current communication mode is not to the same as the communication mode detected in the operation state detection step.

14. The method as claimed in claim 13, wherein during the changing step the operation state detection and the communication mode detection are repeatedly performed during a predetermined period of time.

15. The method as claimed in claim 14, wherein the changing step further includes the step of maintaining the current communication mode if the current communication mode is the same as the communication mode detected in the communication mode detection step before a predetermined time is expired.

16. The method as claimed in one of claims 12 to 15, wherein during the operation state detection step, the operation state is a video communication mode if the folder is open and the camera part is operating, and the operation state is a voice communication mode if the folder is open and the camera part is not operating.

17. The method as claimed in one of claims 12 to 16, wherein the operation state detection step further includes the step of detecting if an ear-mike of the mobile communication terminal is operating.

18. The method as claimed in claim 17, wherein during the operation state detection step, the operation state is a voice communication mode if the folder is closed and the ear-mike is operating, and the operation state is a communication termination state if the folder is closed and the ear-mike is not operating.

19. The method as claimed in claim 17, wherein during the operation state detection step, the camera part is determined as operating if the folder is in the open state and an operation of the ear-mike is detected, the operation state is the video communication mode if the camera part is operating, and the operation state is the voice communication mode if the camera part is not operating.

20. The method as claimed in one of claims 12 to 19, wherein the changing step further includes the step of adjusting a communication environment according to the changed communication mode.

21. The method as claimed in claim 20, wherein the adjusting of the communication environment includes the step of adjusting an amount of sound volume and adjusting power on/off of the camera part according to the changed communication mode.

22. A method for automatically changing a communication mode in a mobile communication terminal which can perform video communication and includes a user access detection part capable of detecting a user within a predetermined distance, the method comprising the steps of:
detecting the communication mode of the mobile communication terminal;
detecting an operation state of the mobile communication terminal based on a folder state of the mobile communication terminal, an operation state of a camera part of the mobile communication terminal, and a detection result of the user access detection part; and
setting the communication mode to one of a voice communication mode and a video communication mode based on the operation state of the mobile communication terminal.

23. The method as claimed in claim 22, wherein during the operation state detection step, the operation state is determined based on the operation state of the camera part if the folder is open and the user is not detected.

24. The method as claimed in claim 22 or 23, wherein during the operation state detection step, the operation state is the voice communication mode if the folder is open and the user is detected.

25. The method as claimed in one of claims 22 to 24, wherein the operation state detection step further includes a step of detecting if an ear-mike is operating.

26. The method as claimed in claim 25, wherein during the operation state detection step, the operation state is determined based on the operation state of the camera part if the folder is closed and the ear-mike is operating.
